# EUROPEAN PATENT APPLICATION

(11) **EP 4 836 245 A1**
(43) Date of publication of application: **04.11.2026**
(21) Application number: 24910010.8
(22) Date of filing: 12.09.2024
(51) Int. Cl.: H02K 1/24, H02K 1/26, H02K 3/12, H02K 3/52

(54) **ROTOR LAMINATION, ROTOR CORE, ROTOR, WOUND FIELD SYNCHRONOUS MOTOR, AND VEHICLE**

(30) Priority: 28.12.2023 CN 202311837935
(71) Applicant: BYD Company Limited, Shenzhen, Guangdong 518118 (CN)
(72) Inventor: WEN, Yan, Shenzhen, Guangdong 518118 (CN); WU, Shixun, Shenzhen, Guangdong 518118 (CN)
(74) Representative: Mathys & Squire
(86) International application number: PCT/CN2024/118482
(87) International publication number: WO 2025/139064

(57) **Abstract**

A vehicle is provided. The vehicle includes an electrically excited synchronous motor, the electrically excited synchronous motor includes a rotor, the rotor includes a rotor core, and the rotor core includes a rotor lamination. The rotor lamination includes a yoke portion and a plurality of tooth portions. The plurality of tooth portions are provided on the yoke portion and are spaced apart in a circumferential direction of the yoke portion. At least one of the tooth portions is provided with a first flux barrier slot, and the first flux barrier slot extends through, in an axial direction of the rotor lamination, the tooth portion in which the first flux barrier slot is located.

## Description

### CROSS-REFERENCE TO RELATED APPLICATIONS

This application claims priority to Chinese Patent Application No. 202311837935.0, filed with the China National Intellectual Property Administration on December 28, 2023, and entitled "ROTOR LAMINATION, ROTOR CORE, ROTOR, ELECTRICALLY EXCITED SYNCHRONOUS MOTOR, AND VEHICLE", which is incorporated herein by reference in its entirety.

### TECHNICAL FIELD

This application relates to the field of vehicle technologies, and in particular, to a rotor lamination, a rotor core, a rotor, an electrically excited synchronous motor, and a vehicle.

### BACKGROUND

Currently, electrically excited wound synchronous motors do not use rare-earth permanent magnets, but form rotor excitation magnetic fields by supplying direct current to rotor windings, which have low costs, can control magnitudes of rotor excitation currents, and have good speed regulation performance. Therefore, electrically excited wound synchronous motors are widely used in electric vehicles. However, during operation of the electrically excited synchronous motor, a rotor of the electrically excited motor forms an excitation magnetic field by supplying current to a winding, which causes additional copper loss. In addition, as the load increases, a rotor excitation current also needs to increase, leading to increasing rotor copper loss. This reduces motor efficiency and affects heat dissipation.

### SUMMARY

This application is intended to resolve at least one of technical problems existing in conventional technologies. Therefore, an objective of this application is to provide a rotor lamination. The rotor lamination can increase an output reluctance torque of a motor and can improve efficiency of the motor.

This application further provides a rotor core.

This application further provides a rotor.

This application further provides an electrically excited synchronous motor.

This application further provides a vehicle.

A rotor lamination according to this application includes: a yoke portion; and a plurality of tooth portions, wherein the plurality of tooth portions are provided on the yoke portion and are spaced apart in a circumferential direction of the yoke portion. At least one of the tooth portions is provided with a first flux barrier slot, and the first flux barrier slot extends through, in an axial direction of the rotor lamination, the tooth portion in which the first flux barrier slot is located.

In the rotor lamination according to this application, through an arrangement in which the plurality of tooth portions are spaced apart in the circumferential direction of the yoke portion and the first flux barrier slot is provided on the at least one of the tooth portions, a quadrature-axis reluctance can be increased, so that an output reluctance torque of a motor can be increased, and motor efficiency and torque density can be improved.

In some examples of this application, the first flux barrier slot extends through in an extension direction of a center line of the tooth portion in which the first flux barrier slot is located, and the center line of the tooth portion extends through in a radial direction of the yoke portion.

In some examples of this application, the center line of the tooth portion bisects the first flux barrier slot of the tooth portion.

In some examples of this application, a size of the first flux barrier slot in a direction perpendicular to the center line of the tooth portion in which the first flux barrier slot is located and the axial direction of the rotor lamination is H1, a size of the tooth portion in the direction perpendicular to the center line of the tooth portion and the axial direction of the rotor lamination is H2, H1 and H2 satisfy a relational expression: H1=H2/a, and 8.92≤a≤11.98.

In some examples of this application, at least one of the tooth portions is provided with at least two first flux barrier slots, and the at least two first flux barrier slots are spaced apart in a direction perpendicular to a center line of the tooth portion in which the at least two first flux barrier slots are located and the axial direction of the rotor lamination.

In some examples of this application, the at least two first flux barrier slots are symmetrically provided with respect to the center line of the tooth portion in which the at least two first flux barrier slots are located.

In some examples of this application, a size of the first flux barrier slot in the direction perpendicular to the center line of the tooth portion in which the at least two first flux barrier slots are located and the axial direction of the rotor lamination is H1, and a size of the tooth portion in the direction perpendicular to the center line of the tooth portion and the axial direction of the rotor lamination is H2. A spacing between two adjacent first flux barrier slots in a direction perpendicular to a center line of a tooth portion in which the two adjacent first flux barrier slots are located and the axial direction of the rotor lamination is H3, H1, H2, and H3 satisfy a relational expression: H3-n*H1=b*H2, 1.82≤b≤2.18, n≥2, and n is a quantity of the at least two first flux barrier slots.

In some examples of this application, a tooth shoulder is provided on each of two sides of the tooth portion in the direction perpendicular to the center line of the tooth portion and the axial direction of the rotor lamination, the tooth shoulder is located on an end of the tooth portion that is away from the yoke portion, and the tooth shoulder has an inner edge facing the yoke portion. An end of the first flux barrier slot that is away from the yoke portion is located between an outer edge of the tooth portion in which the first flux barrier slot is located and the inner edge of the tooth shoulder.

In some examples of this application, an end of the first flux barrier slot that is adjacent to the yoke portion extends to the yoke portion.

In some examples of this application, the first flux barrier slot is a through slot extending from an end adjacent to the yoke portion to an end away from the yoke portion. Alternatively, the first flux barrier slot is a discontinuous slot provided with a blocking portion between an end adjacent to the yoke portion and an end away from the yoke portion, and the first flux barrier slot includes at least two sub-slots separated by the blocking portion.

In some examples of this application, the yoke portion is provided with at least one second flux barrier slot extending through in the axial direction of the rotor lamination.

In some examples of this application, the second flux barrier slot has a center line extending in the radial direction of the yoke portion, and the center line bisects the second flux barrier slot in the circumferential direction of the yoke portion.

In some examples of this application, in the circumferential direction of the yoke portion, the second flux barrier slot is located between the first flux barrier slots of two adjacent tooth portions.

In some examples of this application, the second flux barrier slot and the first flux barrier slot are spaced apart, and the second flux barrier slot is closer to a center of the yoke portion than the first flux barrier slot. Alternatively, the tooth portion is provided with at least two first flux barrier slots, and the second flux barrier slot is connected between two first flux barrier slots of the two adjacent tooth portions that are close to each other.

In some examples of this application, a size of the second flux barrier slot in the extension direction of the center line is the same as the size of the first flux barrier slot in the direction perpendicular to the center line of the tooth portion in which the first flux barrier slot is located and the axial direction of the rotor lamination.

A rotor core according to this application includes the foregoing rotor lamination, and a plurality of rotor laminations are stacked.

A rotor according to this application includes the foregoing rotor core and a rotor shaft, and the rotor shaft is mounted on the rotor core.

An electrically excited synchronous motor according to this application includes the foregoing rotor.

A vehicle according to this application includes the foregoing electrically excited synchronous motor.

Additional aspects and advantages of this application are in part described in the following descriptions and in part become clear in the following descriptions or are learned through practice of this application.

### BRIEF DESCRIPTION OF DRAWINGS

The foregoing and/or additional aspects and advantages of this application will become clear and easily understood from descriptions of embodiments with reference to the following drawings.
FIG. 1 is a diagram of a structure of a first type of single-layer flux barrier;
FIG. 2 is a diagram of a partial structure of a first type of single-layer flux barrier;
FIG. 3 is a diagram of a structure of a second type of single-layer flux barrier;
FIG. 4 is a diagram of a partial structure of a second type of single-layer flux barrier;
FIG. 5 is a diagram of a structure of a first type of double-layer flux barrier;
FIG. 6 is a diagram of a partial structure of a first type of double-layer flux barrier;
FIG. 7 is a diagram of a structure of a second type of double-layer flux barrier;
FIG. 8 is a diagram of a partial structure of a second type of double-layer flux barrier;
FIG. 9 is a block diagram of a rotor core according to an embodiment of this application;
FIG. 10 is a block diagram of a rotor according to an embodiment of this application;
FIG. 11 is a block diagram of an electrically excited synchronous motor according to an embodiment of this application; and
FIG. 12 is a block diagram of a vehicle according to an embodiment of this application.

### Reference numerals:

vehicle 1000;
electrically excited synchronous motor 100; rotor 200; rotor core 300; rotor shaft 310;
rotor lamination 10;
yoke portion 20; second flux barrier slot 21; tooth portion 30; first flux barrier slot 31; sub-slot 301; tooth shoulder 32; rotor slot 33; and rotor winding 40.

### DESCRIPTION OF EMBODIMENTS

The following describes in detail embodiments of this application. Embodiments described with reference to accompanying drawings are examples.

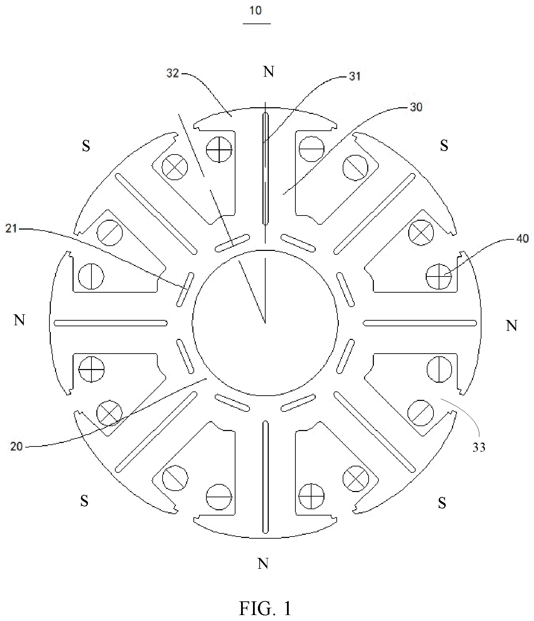

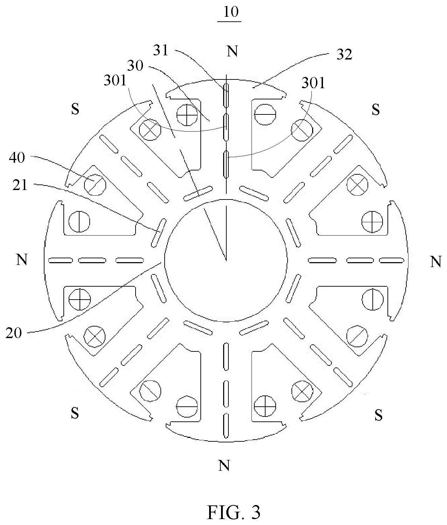

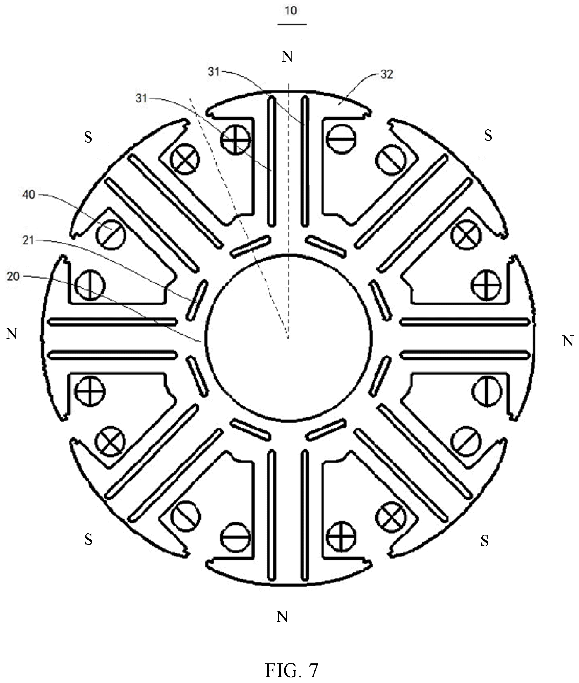

The following describes a rotor lamination 10 according to an embodiment of this application with reference to FIG. 1 to FIG. 8. The rotor lamination 10 is used in a vehicle, for example, an electric vehicle.

As shown in FIG. 1 to FIG. 8, the rotor lamination 10 according to this application includes a yoke portion 20 and a plurality of tooth portions 30. The plurality of tooth portions 30 are provided on the yoke portion 20 and are spaced apart in a circumferential direction of the yoke portion 20. The tooth portion 30 has a center line extending in a radial direction of the yoke portion 20, at least one of the tooth portions 30 is provided with a first flux barrier slot 31, the first flux barrier slot 31 extends through, in an axial direction of the rotor lamination 10, the tooth portion 30 in which the first flux barrier slot 31 is located, and the first flux barrier slot 31 extends through in an extension direction of the center line of the tooth portion 30 in which the first flux barrier slot 31 is located.

It will be understood that the yoke portion 20 and plurality of tooth portions 30 form a main structure of the rotor lamination 10. Inner ends of the plurality of tooth portions 30 are connected to the yoke portion 20, and the plurality of tooth portions 30 are spaced apart. Polarities of two adjacent tooth portions 30 are opposite, and are respectively an N (north) pole and an S (south) pole. The first flux barrier slot 31 is provided on the at least one of the tooth portions 30, the first flux barrier slot 31 is provided in a radial direction of the corresponding tooth portion 30, and a center line of the first flux barrier slot 31 extending in an extension direction of the first flux barrier slot 31 and the center line of the tooth portion 30 may overlap or be parallel. Through this arrangement, the first flux barrier slot 31 and the tooth portion 30 can form a flux barrier, and rotor slots 33 formed on two sides of each tooth portion 30 can be configured to accommodate rotor windings 40. The rotor windings 40 serve as positive and negative poles respectively, and the positive and negative rotor windings 40 form a loop. An included angle between a center line of a rotor magnetic pole and a center line of the first flux barrier slot 31 is α, where α=360/p/4 (p is a quantity of rotor pole pairs), so that a reluctance torque of a motor can be approximately proportional to a difference between quadrature-axis and direct-axis inductances of the motor, thereby increasing an output reluctance torque of the motor.

Specifically, when the output torque remains constant, increasing a proportion of the reluctance torque can reduce excitation torque, and corresponding excitation current and excitation loss are both reduced, so that motor efficiency and torque density can be improved. When a rotor excitation current remains constant, that is, when an excitation torque remains constant, increasing a reluctance torque and adjusting a corresponding angle between direct-axis and quadrature-axis components of the reluctance torque and direct-axis and quadrature-axis components of a direct-current excitation torque can enable a maximum value of the direct-current excitation torque and a maximum value of the reluctance torque to be superimposed at similar current phase angles, so that torque utilization can be improved, and total torque can be increased.

For example, each tooth portion 30 is provided with the first flux barrier slot 31. Through this arrangement, a reluctance of a quadrature-axis magnetic circuit can be increased without significantly affecting a direct-axis magnetic circuit, so that the difference between the quadrature-axis and direct-axis inductances of the motor can be increased, according to a motor torque formula: $Tem = p \left[{Ψ}_{f}{i}_{q}+\left({L}_{d}-{L}_{q}\right){i}_{d}{i}_{q}\right]$ (1)

In expression (1), p is a quantity of pole pairs, ψ_{f} is a flux linkage, i_{d} is a direct-axis current component, i_{q} is a quadrature-axis current component, L_{d} is a direct-axis inductance component of a stator winding, and L_{q} is a quadrature-axis inductance component of the stator winding.

It will be understood from expression (1) that an output torque of an electrically excited motor includes the excitation torque and the reluctance torque, and the reluctance torque is approximately proportional to the difference between the quadrature-axis and direct-axis inductances of the motor. Increasing the difference between the quadrature-axis and direct-axis inductances of the motor can make an effect of the tooth portion 30 of the motor more obvious, so that a saliency ratio and the reluctance torque can be increased. When the output torque remains constant, increasing the proportion of the reluctance torque can reduce the excitation torque, and the corresponding excitation current and excitation loss are both reduced, so that motor efficiency and torque density can be improved.

Therefore, through an arrangement in which the plurality of tooth portions 30 are spaced apart in the circumferential direction of the yoke portion 20 and the first flux barrier slot 31 is provided on at least one of the tooth portions 30, a quadrature-axis reluctance can be increased, so that the output reluctance torque of the motor can be increased, and the motor efficiency and the torque density can be improved.

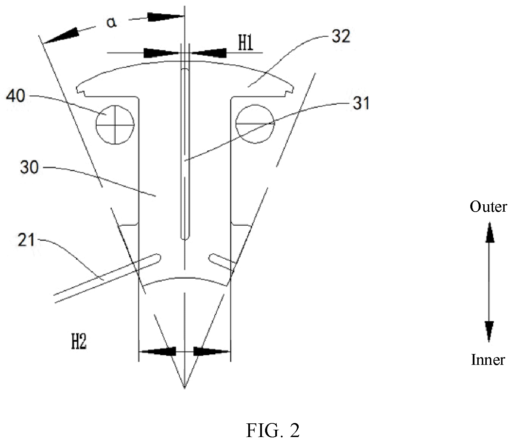

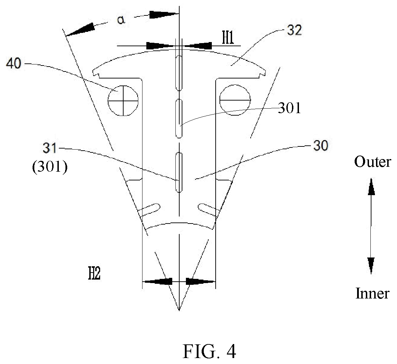

As shown in FIG. 2 and FIG. 4, the center line of the tooth portion 30 bisects the first flux barrier slot 31 of the tooth portion 30, which means that a center line of the first flux barrier slot 31 extending in a length direction of the first flux barrier slot 31 and the center line of the tooth portion 30 in which the first flux barrier slot 31 is located may overlap. Through this arrangement, the first flux barrier slot 31 can radially extend along the center line of the tooth portion 30. The center line of the first flux barrier slot 31 extending in the extension direction of the first flux barrier slot 31 and the center line of the tooth portion 30 may overlap or be parallel, so that the saliency ratio can be increased, a width of an original direct-axis magnetic circuit can be further reduced, and saturation of the direct-axis magnetic circuit can be intensified, causing a reduction in excitation torque, thereby increasing output reluctance torque of the motor.

Optionally, as shown in FIG. 2 and FIG. 4, a size of the first flux barrier slot 31 in a direction perpendicular to the center line of the tooth portion 30 in which the first flux barrier slot 31 is located and the axial direction of the rotor lamination 10 is H1, a size of the tooth portion 30 in the direction perpendicular to the center line of the tooth portion 30 and the axial direction of the rotor lamination 10 is H2, H1 and H2 satisfy a relational expression: H1=H2/a, and 8.92≤a≤11.98. In other words, the size of the first flux barrier slot 31 in the direction perpendicular to the center line of the tooth portion 30 in which the first flux barrier slot 31 is located and the axial direction of the rotor lamination 10 is a width, and the size of the tooth portion 30 in the direction perpendicular to the center line of the tooth portion 30 and the axial direction of the rotor lamination 10 is a pole width. A ratio of the width of the first flux barrier slot 31 to the pole width of the tooth portion 30 needs to be within a proper range, so that amplitudes of an increase in the reluctance torque and a reduction in the excitation torque can be balanced. The ratio should not be less than 8.92 or greater than 11.98. If the ratio is less than 8.92 or greater than 11.98, the reluctance of the quadrature-axis magnetic circuit is reduced, and the reluctance torque of the motor can also be reduced. If the ratio is within the proper range, the difference between the quadrature-axis and direct-axis inductances of the motor can be increased, so that the reluctance torque of the motor can be increased. For example, when the output torque remains constant, increasing the proportion of the reluctance torque can reduce the excitation torque, and the corresponding excitation current and excitation loss are both reduced, so that motor efficiency and torque density can be improved.

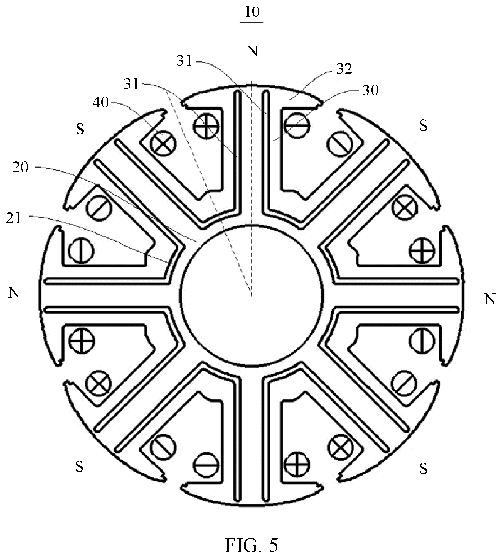

In addition, as shown in FIG. 5 to FIG. 8, at least one of the tooth portions 30 is provided with at least two first flux barrier slots 31, and the at least two first flux barrier slots 31 are spaced apart in a direction perpendicular to a center line of the tooth portion 30 in which the at least two first flux barrier slots 31 are located and the axial direction of the rotor lamination 10. It will be understood that the two first flux barrier slots 31 are spaced apart relative to an axial center line of the tooth portion 30 in which the two first flux barrier slots 31 are located. Through this arrangement, the first flux barrier slot 31 and the tooth portion 30 can form a double-layer flux barrier, so that the saliency ratio can be increased, the width of the original direct-axis magnetic circuit can be further reduced, and the saturation of the direct-axis magnetic circuit can be intensified, causing the reduction in the excitation torque, thereby ensuring that an overall output torque is maximized.

Specifically, as shown in FIG. 5 to FIG. 8, the at least two first flux barrier slots 31 are symmetrically provided with respect to the center line of the tooth portion 30 in which the at least two first flux barrier slots 31 are located. Through this arrangement, distances of two first flux barrier slots 31 on the tooth portion 30 from the center line of the tooth portion 30 can be the same, so that the double-layer flux barrier can form a symmetric structure, thereby further ensuring that the overall output torque is maximized.

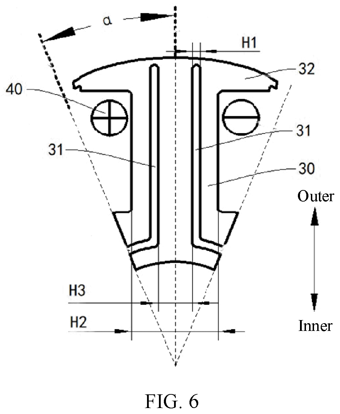

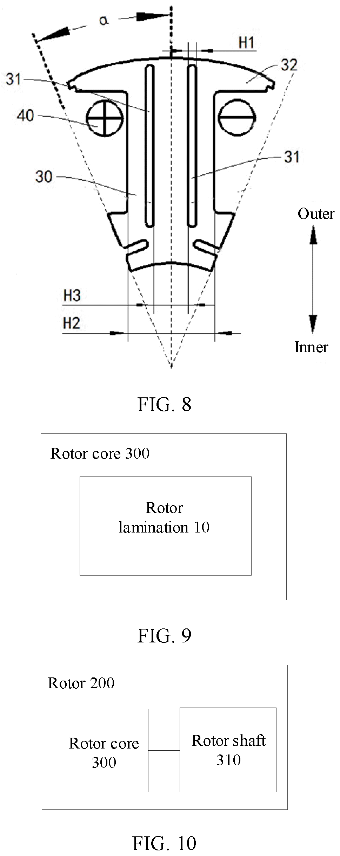

Optionally, as shown in FIG. 6 and FIG. 8, the size of the first flux barrier slot 31 in the direction perpendicular to the center line of the tooth portion 30 in which the first flux barrier slot 31 is located and the axial direction of the rotor lamination 10 is H1, and the size of the tooth portion 30 in the direction perpendicular to the center line of the tooth portion 30 and the axial direction of the rotor lamination 10 is H2. A spacing between two adjacent first flux barrier slots 31 in a direction perpendicular to a center line of a tooth portion 30 in which the two adjacent first flux barrier slots 31 are located and the axial direction of the rotor lamination 10 is H3, H1, H2, and H3 satisfy a relational expression: H3-n*H1=b*H2, 1.82≤b≤2.18, n≥2, and n is a quantity of the at least two first flux barrier slots 31. In other words, the relational expression between H1, H2, and H3 needs to be within a proper range, and a value of n is an integer greater than or equal to 2. If the relational expression is within the proper range, the magnetic reluctance of the quadrature-axis magnetic circuit can be increased with minimal impact on the direct-axis magnetic circuit. In other words, the difference between the quadrature-axis and direct-axis inductances of the motor is increased, so that the reluctance torque of the motor can be increased. For example, when the output torque remains constant, increasing the proportion of the reluctance torque can reduce the excitation torque, and the corresponding excitation current and excitation loss are both reduced, so that the motor efficiency and the torque density can be improved.

In some examples of this application, as shown in FIG. 2 and FIG. 4, a tooth shoulder 32 is provided on each of two sides of the tooth portion 30 in the direction perpendicular to the center line of the tooth portion 30 and the axial direction of the rotor lamination 10, the tooth shoulder 32 is located on an end of the tooth portion 30 that is away from the yoke portion 20, and the tooth shoulder 32 has an inner edge facing the yoke portion 20. An end of the first flux barrier slot 31 that is away from the yoke portion 20 is located between an outer edge of the tooth portion 30 in which the first flux barrier slot 31 is located and the inner edge of the tooth shoulder 32. It will be understood that the end of the tooth portion 30 that is away from the yoke portion 20 is an outer end, and an end of the tooth portion 30 that is close to the yoke portion 20 is an inner end. The tooth shoulder 32 is located at the outer end of the tooth portion 30, and a width of the tooth shoulder 32 is greater than a width of the tooth portion 30, so that the tooth shoulder 32 can protect the tooth portion 30, thereby prolonging service life of the tooth portion 30. The first flux barrier slot 31 is located inside the tooth portion 30, and an outer end of the first flux barrier slot 31 is also located inside the tooth shoulder 32, so that a center line of the first flux barrier slot 31 extending in the radial direction of the yoke portion 20 and the center line of the tooth portion 30 overlap, so that the output reluctance torque of the motor can be increased.

In addition, as shown in FIG. 1 to FIG. 8, an end of the first flux barrier slot 31 that is adjacent to the yoke portion 20 extends to the yoke portion 20. In other words, an inner end of the first flux barrier slot 31 extends to the yoke portion 20. Through this arrangement, a length of the first flux barrier slot 31 can be increased, so that the first flux barrier slot 31 can act as a flux barrier between rotor windings on two sides. In this way, the quadrature-axis reluctance can be increased, thereby further increasing the output reluctance torque of the motor.

Specifically, as shown in FIG. 1 to FIG. 8, the first flux barrier slot 31 is a through slot extending from the end adjacent to the yoke portion 20 to an end away from the yoke portion 20. Alternatively, the first flux barrier slot 31 is a discontinuous slot provided with a blocking portion between the end adjacent to the yoke portion 20 and the end away from the yoke portion 20, and the first flux barrier slot 31 includes at least two sub-slots 301 separated by the blocking portion.

In other words, the first flux barrier slot 31 is a through slot extending from the inner end to the outer end, or the first flux barrier slot 31 is a discontinuous slot provided with the blocking portion between the inner end and the outer end. The first flux barrier slot 31 may be the through slot or the discontinuous slot. In addition, the discontinuous slot is divided into at least two sub-slots 301 in the extension direction of the center line of the tooth portion 30, thereby increasing arrangement forms of the first flux barrier slot 31. The rotor lamination 10 may select an appropriate type of the first flux barrier slot 31 based on an actual situation, to meet a corresponding requirement.

Moreover, as shown in FIG. 1 to FIG. 8, the yoke portion 20 is provided with at least one second flux barrier slot 21 extending through in the axial direction of the rotor lamination 10. The second flux barrier slot 21 has a center line extending in the radial direction of the yoke portion 20, and the center line bisects the second flux barrier slot 21 in the circumferential direction of the yoke portion 20. It will be understood that second flux barrier slots 21 are circumferentially spaced apart on the yoke portion 20, and the second flux barrier slots 21 are close to the inner end of the first flux barrier slots 31. Through this arrangement, the quadrature-axis reluctance can be increased, the quadrature-axis inductance can be reduced, and the difference between the quadrature-axis and direct-axis inductances can be increased, so that the reluctance torque of the motor can be approximately proportional to the difference between the quadrature-axis and direct-axis inductances of the motor, thereby increasing the output reluctance torque of the motor and improving the motor efficiency.

Specifically, as shown in FIG. 1 to FIG. 8, in the circumferential direction of the yoke portion 20, the second flux barrier slot 21 is located between first flux barrier slots 31 of two adjacent tooth portions 30. Through this arrangement, the second flux barrier slot 21 is close to the first flux barrier slot 31, and can increase the quadrature-axis reluctance between the two tooth portions 30, reduce the quadrature-axis inductance, and increase the difference between the quadrature-axis and direct-axis inductances.

In addition, as shown in FIG. 1 to FIG. 8, the second flux barrier slot 21 and the first flux barrier slot 31 are spaced apart, and the second flux barrier slot 21 is closer to a center of the yoke portion 20 than the first flux barrier slot 31. Alternatively, the tooth portion 30 is provided with at least two first flux barrier slots 31, and the second flux barrier slot 21 is connected between two first flux barrier slots 31 of the two adjacent tooth portions 30 that are close to each other.

In other words, the second flux barrier slot 21 is close to the center of the main body portion 20, the second flux barrier slot 21 is located on an inner side of the inner end of the first flux barrier slot 31, and the second flux barrier slot 21 and the first flux barrier slot 31 are staggered. In this way, there is a specific spacing distance between the second flux barrier slot 21 and the first flux barrier slot 31, so that structural reliability of the rotor lamination 10 can be ensured. Alternatively, the second flux barrier slot 21 is connected to the first flux barrier slot 31. In this way, the second flux barrier slot 21 and the first flux barrier slot 31 are directly in communication, which has a good flux barrier effect, so that the quadrature-axis reluctance can be better increased.

Through these two arrangement modes, the second flux barrier slot 21 can achieve an effect of increasing the quadrature-axis reluctance. The rotor lamination 10 may select an appropriate type of the second flux barrier slot 21 based on an actual situation, to meet a corresponding requirement.

In addition, as shown in FIG. 1 to FIG. 8, a size of the second flux barrier slot 21 in the extension direction of the center line is the same as the size of the first flux barrier slot 31 in the direction perpendicular to the center line of the tooth portion 30 in which the first flux barrier slot 31 is located and the axial direction of the rotor lamination 10. In other words, a width of the second flux barrier slot 21 is the same as the width of the first flux barrier slot 31. This arrangement facilitates manufacturing of the second flux barrier slot 21 and the first flux barrier slot 31, especially an arrangement form for connection between the second flux barrier slot 21 and the first flux barrier slot 31. Moreover, by unifying the width of the second flux barrier slot 21 with the width of the first flux barrier slot 31, different flux barrier effects due to inconsistent widths can be further avoided, thereby avoiding impact on performance of the rotor.

A rotor core 300 according to an embodiment of this application includes the rotor lamination 10 in any one of the foregoing embodiments, and a plurality of rotor laminations 10 are stacked, as shown in FIG. 9. In this way, an output reluctance torque of a motor can be increased, and motor efficiency and torque density can be improved.

A rotor 200 according to an embodiment of this application includes the rotor core 300 in the foregoing embodiment and a rotor shaft 310, and the rotor shaft 310 is mounted on the rotor core 300, as shown in FIG. 10. Through this arrangement, the rotor 200 can improve motor efficiency and torque density.

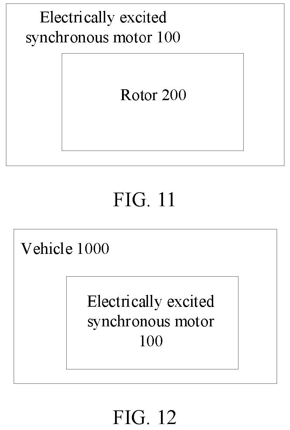

An electrically excited synchronous motor 100 according to an embodiment of this application includes the rotor 200 in the foregoing embodiment, as shown in FIG. 11. Through this arrangement, the motor can improve motor efficiency and torque density.

A vehicle 1000 according to an embodiment of this application includes the electrically excited synchronous motor 100 in the foregoing embodiment, as shown in FIG. 12. Through this arrangement, the motor in the vehicle 1000 can improve motor efficiency and torque density.

In the descriptions of this application, it will be understood that orientations or position relationships indicated by the term "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial direction", "radial direction", "circumferential direction", and the like are based on orientations or position relationships shown in the accompanying drawings, and are merely intended to facilitate description and simplify descriptions of this application, but is not intended to indicate or imply that a specified apparatus or element needs to have a specific orientation, be constructed in a specific orientation, and operate in a specific orientation. Therefore, such terms cannot be construed as a limitation on this application.

In the descriptions of this application, a "first feature" or a "second feature" may include one or more such features. In the descriptions of this application, "a plurality of" means two or more. In the descriptions of this application, that the first feature is "above" or "below" the second feature may include a case in which the first feature is in direct contact with the second feature, or may also include a case in which the first feature is not in direct contact with the second feature but in contact with the second feature through another feature between the first feature and the second feature. In the descriptions of this application, that the first feature is "above", "over", or "on" the second feature may include a case in which the first feature is right above or obliquely above the second feature, or merely indicates that a horizontal height of the first feature is greater than that of the second feature.

In the descriptions of this specification, descriptions of a reference term such as "an embodiment", "some embodiments", "example embodiment", "example", "specific example", or "some examples" mean that a specific feature, structure, material, or characteristic described with reference to the embodiment or example is included in at least one embodiment or example of this application. In this specification, the example expressions of the foregoing terms are not necessarily directed to the same embodiment or example.

Although embodiments of this application have been shown and described, a person of ordinary skill in the art will understand that various changes, modifications, replacements, and variations may be made to embodiments without departing from the principle and purpose of this application. The scope of this application is defined by the claims and equivalents thereof.

## Claims

1. A rotor lamination (10), comprising:
a yoke portion (20); and
a plurality of tooth portions (30), the plurality of tooth portions (30) being provided on the yoke portion (20) and being spaced apart in a circumferential direction of the yoke portion (20), wherein
at least one of the tooth portions (30) is provided with a first flux barrier slot (31), and the first flux barrier slot (31) extends through, in an axial direction of the rotor lamination (10), the tooth portion (30) in which the first flux barrier slot (31) is located.

2. The rotor lamination (10) according to claim 1, wherein the first flux barrier slot (31) extends through in an extension direction of a center line of the tooth portion (30) in which the first flux barrier slot (31) is located, and the center line of the tooth portion (30) extends through in a radial direction of the yoke portion (20).

3. The rotor lamination (10) according to claim 2, wherein the center line of the tooth portion (30) bisects the first flux barrier slot (31) of the tooth portion (30).

4. The rotor lamination (10) according to claim 2 or 3, wherein a size of the first flux barrier slot (31) in a direction perpendicular to the center line of the tooth portion (30) in which the first flux barrier slot (31) is located and the axial direction of the rotor lamination (10) is H1, a size of the tooth portion (30) in the direction perpendicular to the center line of the tooth portion (30) and the axial direction of the rotor lamination (10) is H2, H1 and H2 satisfy a relational expression: H1=H2/a, and 8.92≤a≤11.98.

5. The rotor lamination (10) according to claim 1, wherein at least one of the tooth portions (30) is provided with at least two first flux barrier slots (31), and the at least two first flux barrier slots (31) are spaced apart in a direction perpendicular to a center line of the tooth portion (30) in which the at least two first flux barrier slots (31) are located and the axial direction of the rotor lamination (10).

6. The rotor lamination (10) according to claim 5, wherein the at least two first flux barrier slots (31) are symmetrically provided with respect to the center line of the tooth portion (30) in which the at least two first flux barrier slots (31) are located.

7. The rotor lamination (10) according to claim 5 or 6, wherein a size of the first flux barrier slot (31) in the direction perpendicular to the center line of the tooth portion (30) in which the at least two first flux barrier slots (31) are located and the axial direction of the rotor lamination (10) is H1, and a size of the tooth portion (30) in the direction perpendicular to the center line of the tooth portion (30) and the axial direction of the rotor lamination (10) is H2; and
a spacing between two adjacent first flux barrier slots (31) in a direction perpendicular to a center line of a tooth portion (30) in which the two adjacent first flux barrier slots (31) are located and the axial direction of the rotor lamination (10) is H3, H1, H2, and H3 satisfy a relational expression: H3-n*H1=b*H2, 1.82≤b≤2.18, n≥2, and n is a quantity of the at least two first flux barrier slots (31).

8. The rotor lamination (10) according to any one of claims 1 to 7, wherein a tooth shoulder (32) is provided on each of two sides of the tooth portion (30) in the direction perpendicular to the center line of the tooth portion (30) and the axial direction of the rotor lamination (10), the tooth shoulder (32) is located on an end of the tooth portion (30) that is away from the yoke portion (20), and the tooth shoulder (32) has an inner edge facing the yoke portion (20); and
an end of the first flux barrier slot (31) that is away from the yoke portion (20) is located between an outer edge of the tooth portion (30) in which the first flux barrier slot (31) is located and the inner edge of the tooth shoulder (32).

9. The rotor lamination (10) according to any one of claims 1 to 8, wherein an end of the first flux barrier slot (31) that is adjacent to the yoke portion (20) extends to the yoke portion (20).

10. The rotor lamination (10) according to any one of claims 1 to 9, wherein the first flux barrier slot (31) is a through slot extending from an end adjacent to the yoke portion (20) to an end away from the yoke portion (20); or
the first flux barrier slot (31) is a discontinuous slot provided with a blocking portion between an end adjacent to the yoke portion (20) and an end away from the yoke portion (20), and the first flux barrier slot (31) comprises at least two sub-slots (301) separated by the blocking portion.

11. The rotor lamination (10) according to any one of claims 1 to 10, wherein the yoke portion (20) is provided with at least one second flux barrier slot (21) extending in the axial direction of the rotor lamination (10).

12. The rotor lamination (10) according to claim 11, wherein the second flux barrier slot (21) has a center line extending in the radial direction of the yoke portion (20), and the center line bisects the second flux barrier slot (21) in the circumferential direction of the yoke portion (20).

13. The rotor lamination (10) according to claim 11 or 12, wherein in the circumferential direction of the yoke portion (20), the second flux barrier slot (21) is located between the first flux barrier slots (31) of two adjacent tooth portions (30).

14. The rotor lamination (10) according to any one of claims 11 to 13, wherein the second flux barrier slot (21) and the first flux barrier slot (31) are spaced apart, and the second flux barrier slot (21) is closer to a center of the yoke portion (20) than the first flux barrier slot (31); or
the tooth portion (30) is provided with at least two first flux barrier slots (31), and the second flux barrier slot (21) is connected between two first flux barrier slots (31) of the two adjacent tooth portions (30) that are close to each other.

15. The rotor lamination (10) according to any one of claims 11 to 14, wherein a size of the second flux barrier slot (21) in the extension direction of the center line is the same as the size of the first flux barrier slot (31) in the direction perpendicular to the center line of the tooth portion (30) in which the first flux barrier slot (31) is located and the axial direction of the rotor lamination (10).

16. A rotor core (300), comprising:
a plurality of rotor laminations (10) according to any one of claims 1 to 15, and the plurality of rotor laminations (10) being stacked.

17. A rotor (200), comprising:
the rotor core (300) according to claim 16; and
a rotor shaft (310), and the rotor shaft (310) being mounted on the rotor core (300).

18. An electrically excited synchronous motor (100), comprising the rotor (200) according to claim 17.

19. A vehicle (1000), comprising the electrically excited synchronous motor (100) according to claim 18.
